# EUROPEAN PATENT SPECIFICATION

(11) **EP 1 750 149 B1**
(45) Date of publication and mention of the grant of the patent: **10.05.2017**
(21) Application number: 06118353.9
(22) Date of filing: 03.08.2006
(51) Int. Cl.: G01V 3/10

(54) **Metal detector**
Metalldetektor
Détecteur de métal

(30) Priority: 04.08.2005 EP 05291666
(43) Date of publication of application: 07.02.2007
(73) Proprietor: Manneschi, M. Alessandro, 52100 Arezzo (IT); Manneschi, Giovanni, 52100 Arezzo (IT)
(72) Inventor: Manneschi, M. Alessandro, 52100 Arezzo (IT); Manneschi, Giovanni, 52100 Arezzo (IT)
(74) Representative: Regimbeau

(56) References cited:
- EP-A2- 0 831 339
- EP-A2- 1 219 976
- WO-A2-03/069320
- US-A- 5 397 986
- US-A- 5 406 259
- US-A- 5 859 532

## Description

The present invention relates to the technical field of detectors, such as metal detectors, designed for detecting non-authorized objects in a zone having protected access.

More precisely the present invention relates to the field of the metal detectors provided to detect arms in airport or similar other sensitive areas, such as in official offices, Minister Buildings, schools, banks and so on.

Many kinds of metal detectors have been still disclosed.

Most of the metal detectors which are used todays in airport are in the form of a channel or portal comprising two vertical walls housing specific electric coils connected to a control unit, said two vertical walls being connected at their top side by a transverse horizontal beam.

Generally the coils housed in the walls are planar.

Examples of such known metal detectors are disclosed in the following prior art documents FR-2720519, FR-2775350, FR-2780585, FR-2694098, FR-2697919, FR-2698178, FR-2698968, FR-2608286, FR-2610417, FR-2607937, FR-2608286, FR-2607937, US-6362739, US-6359582, US-6344818, US-6342696, US-6218830, US-5790685, US-5680103, US-5341126, WO03/032011, US-20010042412, WO98/12573, WO97/50000, WO97/42527, EP-0740822, EP-0490921, WO91/03746, US-5121105, WO88/07733, US-20030142853, US-20030128150, US-6507309, US-6507278, US-20020130804, US-6359582, US-6150810, US-6133829, US-5726628, US-5600303, US-5692029, US-5689184, US-5227800, US-5073782, US-5039981, US-4866439, US-4866424, US-4263551, US-4019053, US-4012690, US-3971983, US-3707672, US-4987767, US-5109691, US-4449115.

In some other metal detectors the coils are not planar but in form of a helicoïdal or spiral winding(s) around a vertical and generally cylindrical support. These metal detectors comprising helicoïdal or spiral winding(s) are generally named "column detectors". In view of the first cited detectors comprising planar coils, the metal detectors including helicoïdal or spiral winding offer advantages in term of compacity and esthetic.

Examples of column detectors are disclosed in the following prior art documents FR-A-2607937, IT00072791, IT1214991.

The prior art document WO03/069320 discloses a metal detector comprising a metal detection subsystem, a radiation detection system and a presence detection subsystem. All those detection subsystems are aligned one behind another without any advantages in term of compacity. In some circumstances, the device disclosed in WO03/069320 leads to false or not reliable detections.

Prior art document EP 0831339 discloses means for displaying the location of a detected piece of metal on a symbol of a person.

Prior art document US 5406259 discloses a metal detector for passageways, equipped with transmitter-receiver windings connected, using suitable amplifiers to an Analysis and Control Logic Unit where the signals are compared; and also equipped with at least one corrective receiver winding on each side of a supervised passage used to supply information to the unit about metal bodies in transit along paths close to it, with the aim of rendering uniform the interceptive sensivity throughout the transit area, even when more than one metal body is in simultaneous transit.

The aim of the present invention is now to propose a new metal detector which presents detecting properties which are superior to those of the known devices.

In particular an auxiliary aim of the present invention is to propose a new detector which is not limited to detection of metal but which is suitable to detect also other kinds of attack means.

A specific aim of the present invention is to propose a new metal detector which presents a good esthetic and which is not cumbersome so that said detector may be used in any place including the hall of select building such as hotels, banks and so on.

The above aims are resolved according to the present invention with a detector as defined in enclosed claim 1.

Preferentially said additional type of sensors is chosen in the group comprising at least one sensor suitable to detect ionizing radiations, at least one sensor suitable to detect the presence of explosive material or other specific chemical substances, at least one sensor suitable for the badge readings of persons in transit.

Other characteristics, objects and advantages of the present invention appear on reading the following detailed description and from the accompanying drawings given as non-limiting examples, and in which :
- figures 1 and 2 illustrates two lateral view of a detector in accordance with the present invention,
- figure 3 is a perspective view of the same detector in accordance with the present invention,
- figure 4 is a cross horizontal section of a housing in accordance with the present invention,
- figure 5 is a cross horizontal section of a multi-sensorial control system portal in accordance with the present invention using two column coils in each housing, respectively as a transmitter and a receiver one,
- figure 6 is a cross horizontal section of a multi-sensorial control system portal in accordance with an alternative of the present invention, wherein each one of the two housings comprises two emitting coils or two receiving coils,
- figure 7 illustrates a lateral and partially cutted view of a housing in accordance with the present invention comprising a plurality of X/Gamma sensors staggered in the height of the housing,
- figure 8 illustrates a similar, partial and enlarged view of the same housing,
- figures 9 and 10 illustrate views similar to figures 8 and 9 of a detector in conformity of another specific embodiment of the present invention,
- figure 11 is a cross horizontal section of a housing in accordance with the present invention,
- figure 12 is a similar cross horizontal section of another variant of housing in accordance with the present invention,
- figure 13 is a lateral view of a detector in accordance with the present invention,
- figure 14 is a cross horizontal section of a housing in accordance with an embodiment in form of a panel detector of the present invention,
- figure 15 is a cross vertical and longitudinal section of the same detector in accordance with an embodiment in form of a panel detector of the present invention.

The detector of the invention is a multi-sensorial control system composed of two oblong and vertical shape housings 10, 12, surmounted by a connecting structure 14, and both of them supported by an oblong shape base 16, 18 of support that can be fixed at the floor and that does not present any edge, in order to avoid damages to persons in transit caused by accidental impacts.

The same enclosures or housings 10, 12, placed one in front of the other, basically form two surfaces that, surmounted by a box shape cross bar 14, constitute a portal used for the inspection of people passing through.

The two vertical enclosures 10, 12 house emitting and receiving coils associated with control means suitable to analyse electrical signals issued from the coils to detect metal pieces passing through the portal, between the two housings 10, 12. Such emitting and receiving coils and such control means are well-known for the man skilled in the art. Consequently such coils and such control means will not be described in detail in the following specification.

The portal in accordance with the invention differs from the other devices in use at present, as for instance the portals used in some airports, for additional control instruments located into its side enclosures 10, 12, together with the meta! detector. The enclosures 10, 12 of the invention, can house one or more than one metal detector, one or more than one sensor suitable to detect ionizing radiations, one or more than one sensor suitable to signal the presence of explosive material as well as other substances, one or more sensors suitable for the badge reading of persons in transit.

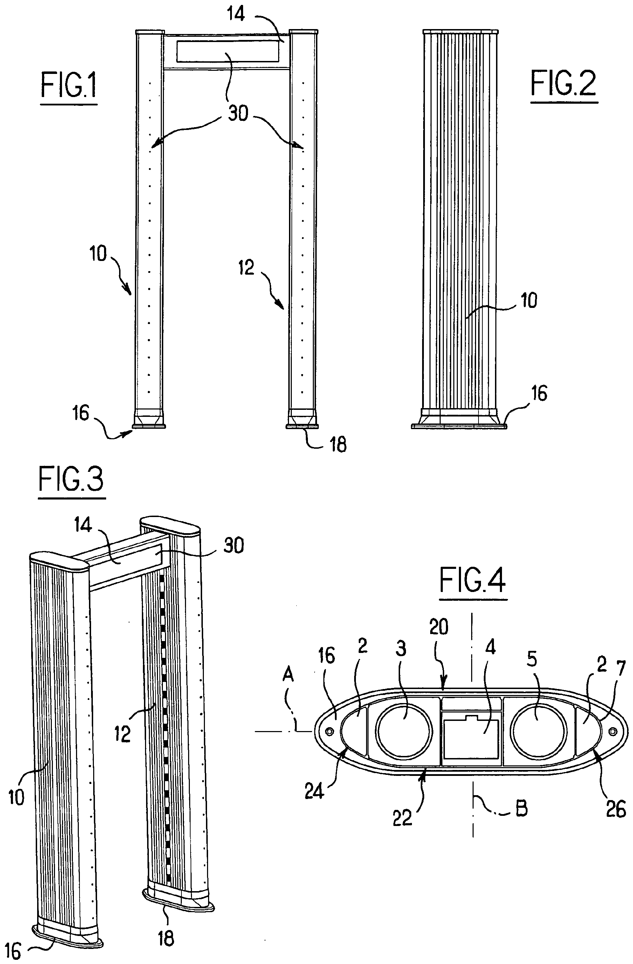

These portals, as shown in figures 1 to 3, appear as oblong shape housings, similar to those represented in the Italian patent n° 00072791, but further lengthened as shown in figure 4 that shows, in reference 16, the boot or supporting base of an enclosure 10 ; in reference 2 a signalling displays indicating the transit height which refers to the detected materials such as : metal masses, radioactive elements, unusual chemical substances, badges and so on (preferably in accordance with the invention all the information issued by the plurality of sensors, such as metal, radioactive, chemical or badge sensors, are displayed on a common signalling display 2); in reference 3 a first column type metal detector (or coil), similar to the one represented in the Italian patent n° 1214991 of the same author, and a badge reader; in reference 5 a second metal detector (or coil), with or without a badge reader (Preferentially the second metal detector 5 is also a column type metal detector similar to the one represented in the Italian patent n° 1214991); in reference 4, a space between said first and second metal detectors 3 and 5, where sensors suitable to detect chemical substance molecules or other sensor such as badge sensor are vertically placed. In the same space 4 are also placed and vertically assembled ionizing radiation sensors. The point 7 shows the oblong shape housing that, similar to an ellipse, gave the structure an harmonic solution, making the transit, as well as the controller's inspection, much easier. More precisely according to figure 4 the two metal detectors 3 and 5 are symmetrically disposed about the additional type of sensors 4, respectively on each side of this one..

Typically but without any limitation, the ratio between the length and the width of the cross section of the housings 10, 12 is between 2 and 4, preferably about 2,75.

Moreover length of the cross section is typically between 60 and 100cm preferably about 80cm while the width of the cross section is typically between 20 and 35cm preferably about 27,5cm.

In one embodiment but without any limitation the external surface of the housing comprises two plane and parallel panels 20, 22, connected at their ends by two rounded parts 24, 26.

Preferentially the housings 10, 12 in accordance with the invention have two perpendicular planes of symmetry A and B.

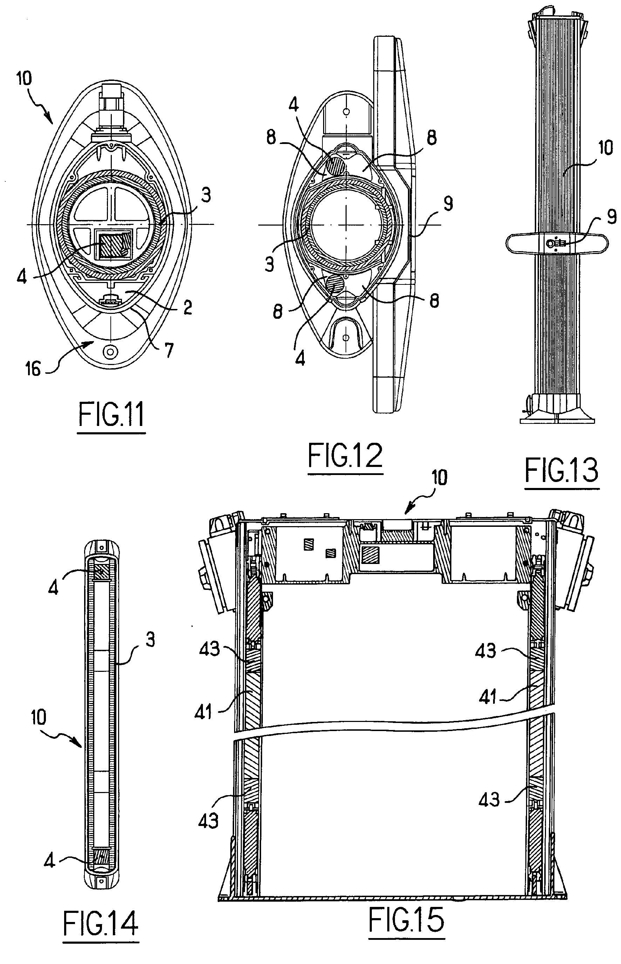

Figure 11 illustrates an embodiment in accordance with the invention wherein a housing 10 houses a metal detector or coil 3 (Preferentially a column type metal detector similar to the one represented in the Italian patent n° 1214991) and an additional type of sensor 4 provided inside said coil 3, essentially symmetrically in regard of said coil 3 so as to provide a physical and geometrical coincidence detection.

In figure 12, the column type metal detector is surrounded by four cavities 8 symmetrically disposed about the said column type metal detector (or coil) 3. Some additional types of sensors 4 are placed vertically in those cavities. The additional types of sensors 4 are symmetrically disposed about the column type metal detector in at least two cavities 8. Preferentially, said additional types of sensors are radiation sensors 4. The more radiation sensors there are, the more the system is responsive. In fact, the responsiveness of the system is proportional to the volume of the radiation sensor material used. The configuration illustrated in figure 12 is equivalent to one responsive radiation sensor inside the column type metal detector.

The present invention may also applies to flat panel metal detector. In other words, according to the present invention, a flat panel metal detector may include for example a central coil metal detector and two additional sensors, one additional sensor respectively on each side of the central coil metal detector, or a coil metal detector and one or a plurality of additional sensor(s) inside said coil metal detector.

Figure 14 illustrates an embodiment of such a flat panel metal detector wherein the housing 10 which has an appreciably elongate and rectangular horizontal cross section houses a classical coil 3 and two additional type of sensors 4 inside said coil 3. More precisely said two sensors 4 extend vertically and are provided respectively in the vicinity of the ends of the horizontal loops of said coil 3. Such a structure of coil for flat panel metal detector is well known for the man skilled in the art and will not be described in detail in the following description. Here again, the sensors 4 and the coil are symmetrical so as to provide physical and geometrical coincidence detections.

Such sensorial structure organisation, is considered optimal for the improvement of the present state-of-the-art which requires, for obtaining the same result, the installation of several and spatially separated devices such as a walk through metal detector, a badge reader, a walk explosive detector, a ionizing radiation detectors and so on.

If required, the same housings 10, 12 can be further lengthened so that to allow the positioning of additional transducers, or shortened by reducing the number of the transducers themselves, but without altering the inventive concept of the device that, in this solution, finds a rational, functional and compatible disposition of the instruments.

In fact, the configuration of figure 4 described above, is of smaller dimensions as regards the ones of the panel type walk through metal detectors in use at present in the market. Furthermore, it has the advantage of a particular rounded section without any corner. The oblong configuration, tapered at the ends, creates a nearly elliptical section, thus allowing its widen central body to house the above mentioned instruments.

This configuration grants additional stability to the portal's supporting surface.

The two housings 10, 12 placed one in front of the other, basically form the walls where people pass through for the inspection and they are connected by two cross bars or by a box structure 14 positioned at the top of the portal, that makes the gate stable and architectonically more agreeable. For aesthetical reasons, the walls can be smooth or striped with omega shape indentations, suitable to reduce the reflections of light or defects such as scratches or dirt caused by the use of the device itself.

The display zones 30, which are positioned in the front and in the rear sides of the gate, remain prevalently smooth. The cross bar or box structure 14 positioned above, could cover totally or partially the transit width according to the esthetical and functional requirements of the device.

Also the upper structure 14 could be made of one or more than one basic cross bar or by a box connection, suitable to contain the electronic equipments which refer to the transducers installed. It could also be constituted by cross bars suitable to contain all or a part of the control electronic equipments.

The choice to dispose the sensitive transducers 3, 4, 5, into both walls, constituted by the containers 10, 12 mentioned above, can be modified without altering the validity of the device that should include the detection equipments in a single system that, in this specific case, results to be a gate. This allows to save space, time of inspection and controllers, as required by those strategic applications such as airports embassies and others, thus improving the transit flow and reducing inconveniences to passengers.

In particular combining all the sensors in the same housings 10, 12, allows to increase the liability of the checking and allows to reduce the number of people in charge of the checking and consequently the overall cost of the checking.

In case some equipments shouldn't be necessary, they could be removed reducing the functions of the system without altering the validity of the invention that, in its basis statement, as shown in the drawing, provides an essential and valid solution for the achievement of the above said advantages.

This multi-sensorial portal can be provided with a display, turned to the passenger in transit. The passenger will be informed by the display if to stop, by means of a "stop" signal, to proceed by means of a "go" signal or he could receive other information. The signals could be visual and/or acoustical.

The system, providing instructions to the passenger, could solve automatically the control activity. Therefore, the person in charge for the surveillance will be only engaged in the supervision of the correct procedure.

The man skilled in the art will appreciate that the detector in accordance with the present invention solve the conditions of security, esthetic and operation now requested in many official, public or private places, especially in airports. Although the narrow spaces available close to the gates do not allow install several equipments, the invention proposes a complete multi-sensorial device which offers additional advantages such as a reduced impact for passengers, fast inspections, easy control, a reduced number of controllers at the gates, thus saving space as above described. Moreover, the symmetrical disposition of the coils 3, 5 and the additional types of sensors 4 is a solution to have a physical and geometrical coincidence. Due to this physical and geometrical coincidence, the analysis provided by a central unit receiving both signals issued by the coils 3, 5 on a one side and the sensors 4 on the other side relates automatically to the same physical entity passing through the portal. In other words it is equivalent to a detector comprising different sensors inspecting the same part of the space at the same time. The invention solves the problem of spatial and temporal simultaneity. It is important to detect simultaneously metal and radiation phenomenon. In fact, the radioactive sources are mainly transported in metal, commonly lead, casings. The passage of that kind of casings over that multi-sensorial gate results in simultaneous changes in both signals. This is a solution to avoid any confusion with radiation signal of a first person with the metal signal of a second one.

Contrarily prior art document WO 03/069320 which teaches juxtaposed, but not symmetrical, detection subsystems, may lead to false or not reliable detections due to the fact that the metal detection subsystem and the radiation detection subsystem may issue respectively signals relating to two different physical entities passing through the portal.

Of course the invention is not limited to the specific above described embodiments. The invention covers all the embodiments defined in the enclosed claims.

As indicated above preferentially each of the two housings 10, 12 comprises two separate emitting TX and/or receiving coils RX, and the detector comprises means controlling operation of said emitting and receiving coils so that when an emitting coil provided in a housing is active, two other and spatially separate receiving coils are also simultaneously or subsequently active.

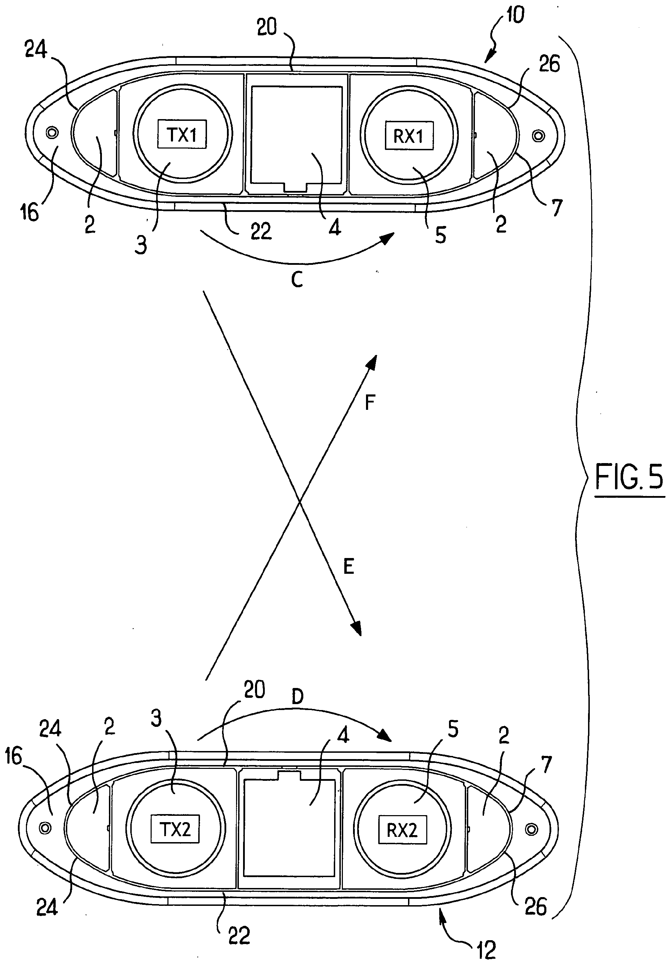

Figure 5 illustrates the cross horizontal section of a multi-sensorial control system portal in accordance with a specific embodiment of the present invention using two column coils 3, 5, in each housing 10, 12, respectively as a transmitter and a receiver one.

More precisely, coil 3 of housing 10 is a transmitter one referenced TX1, coil 5 of housing 10 is a receiver one referenced RX1, coil 3 of housing 12 is transmitter one referenced TX2 and coil 5 of housing 12 is a receiver one referenced RX2. In other words a first transmitter coil TX1 and a first receiver coil RX1 are placed on one side in a housing 10 and a second transmitter coil TX2 and a second receiver coil RX2 are placed on the other side in the second housing 12. The RX1 coil receives the signal issued by the TX1 coil, scanning the volume adjacent to the housing 10 it belongs to. The same RX1 coil receives also the signal issued by the second transmitter coil TX2, prospecting the whole transit volume according to the related diagonal. The same behaviour applies to RX2.

In other words according to figure 5 each of the two housings 10, 12 comprises one emitting coil TX and one receiving coil RX and the detector comprises means controlling operation of said emitting TX and receiving RX coils so that when an emitting coil TX provided in a housing 10 or 12 is active, the two receiving coils RX provided respectively in both the two housings 10, 12 are also simultaneously or subsequently active.

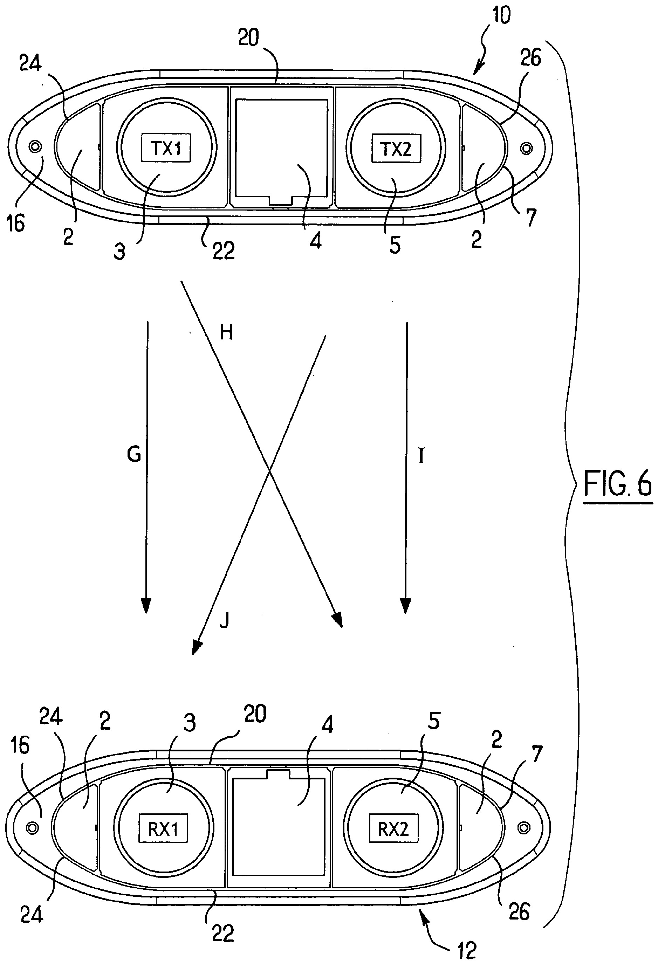

Figure 6 illustrates the cross horizontal section of a control system portal in accordance with an alternative of the invention using in a first housing 10 two emitting coils 3, 5 and in the second housing 12 two receiving coils 3, 5.

More precisely, coil 3 of housing 10 is a transmitter one referenced TX1, coil 5 of housing 10 is also a transmitter one referenced TX2, coil 3 of housing 12 is a receiver one referenced RX1 and coil 5 of housing 12 is also a receiver one referenced RX2. In other words two transmitter coils TX1 and TX2 are placed on one side in a housing 10 and the two receiver coils RX1 and RX2 are placed on the other side in the second housing 12. The RX1 coil receives the signal issued by the TX1 coil and the signal issued by the TX2 coil. The same behaviour applies to RX2.

Of course the same detector may operate subsequently in the two modes illustrated respectively on figures 5 and 6.

Moreover each receiver coil RX may subsequently operates as an emitting one TX and conversely each emitting coil TX may subsequently operates as a receiver one RX.

In the other words according to figure 6 each of the two housings 10, 12 comprises two emitting coils TX or two receiving RX and the detector comprises means controlling operation of said emitting and receiving coils so that when an emitting coil TX provided in a housing 10 or 12 is active, the two receiving coils RX provided in the other housing are also simultaneously or subsequently active.

This layout allows discrimination of the masses carried laterally and/or centrally, by people in transit and eliminates directional effects due to the orientation of lengthened metal masses.

This solution allows the metal detector to achieve a better discrimination than the prior art, thanks to the possibility to generate with TX1, in a specific moment and giving a determined frequency, an electromagnetic field which is received at the same time by RX1 and RX2.

Afterwards or simultaneously, TX2 generates its own magnetic field that will be received by RX1 and RX2 as an induced electromagnetic force.

In this way, thanks to the crossed position of field generators and field receivers, it is easier to detect also laminar metal masses placed in the different orientations. The general directions of the respective emitted electromagnetic fields are illustrated under references C, D, E and F on figure 5 and G, H, I and J on figure 6. These figures clearly show that the invention leads to a plurality of crossed electromagnetic fields.

The above is an additional peculiarity of the column shape transducers that, beside their transmitting and receiving windings, improves their uniformity and discrimination characteristics.

By means of two column shape transmitting and two column shape receiving systems, thanks to the signals received and analysed, the present invention now offers a considerable improvement in the discrimination and considerably reduces the false alarm.

It is also common knowledge that the reduction of false alarms speeds up the inspection of passengers, saving time and personnel.

Another advantage of the invention is to warrant that all the active sensors, such as metal, radioactive, chemical or badge sensors, which are located in the same portal detector operate on a single and the same individual, versus prior art and separate sensors which can be erroneously influenced by a plurality of people leading to a possible false alarm. If necessary the sensing operation by the different sensors may be controlled by a means 9, such as a photoelectric barrier, suitable to detect when an individual penetrates into the portal, so as to assure that the detection is operated when such an individual is inside the portal, between the two housings 10, 12. Figure 13 illustrates an embodiment of such a photoelectric barrier 9.

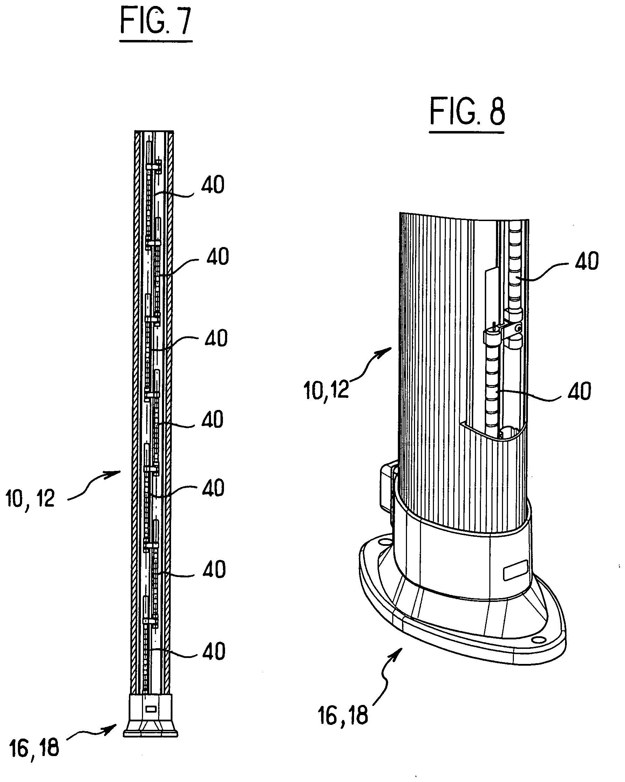

Figures 7 and 8 illustrate another specific embodiment in accordance with the present invention wherein at least one of the two housings 10, 12, and preferably both two housings 10, 12, is (are) provided with a plurality of X/Gamma sensors 40. Said X/Gamma sensors 40 are staggered on the height of the housing 10, 12, so as to cover all the height of said housing.

Dividing the means suitable to detect the X/Gamma rays in a plurality of sensors allows to determine easily the location, i.e. the place in height, of any detected X/Gamma rays source.

The figure 15 illustrates another disposition of the X/Gamma detector. This detector is composed of one scintillator 41 and two photo-detectors 43 disposed on each extremity of the scintillator 41. The sum of the two photo-detectors' signals determines the amplitude of the radiation and the ratio of those two signals gives an information on the location, i.e. the place in height, of any detected X/Gamma rays source. The photo-detectors are expensive, so this solution consisting in using only two photo-detectors in order to have access to the amplitude and the location of the X/Gamma radiation source is compact and low cost.

Moreover in accordance with the present invention the detector is preferentially provided with a general control means or general control Unit suitable to control and to change if necessary the sensitivity of one type of sensor in view of the signal outputted by another type of sensor.

More precisely in accordance with a specific embodiment of the present invention, the metal detector corresponding to the emitting and receiving coils, TX and RX, associated with control means, comprise at least a channel which is particularly adapted to detect lead (Pb) component (while other channels are suitable to detect other metals such as iron) as well as means suitable to increase sensitivity of said X/Gamma rays sensors 40 when said metal detector detects the presence of lead component. Such a provision allows to detect for example the presence of lead casing enclosing a radioactive source.

The above described provision of sensors staggered to cover all the height of a housing and the coupling of two types of sensors so as to change the sensibility of one type of sensor depending on the output of the other type of sensor, is not limited to X/Gamma sensors but covers any kind of sensors compatible with the present invention.

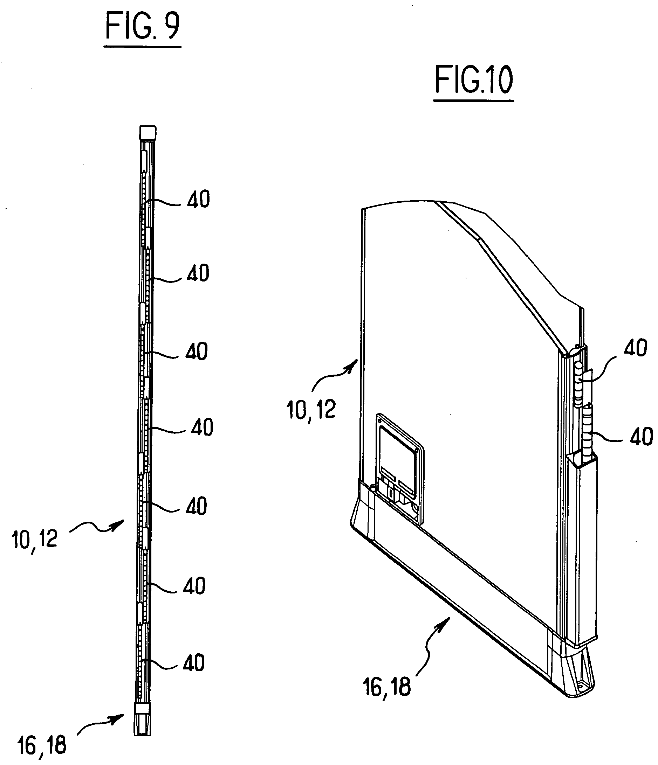

Figures 9 and 10 illustrate views respectively similar to figures 7 and 8 of another detector in accordance with the invention including X/Gamma sensors staggered on the height of a housing in the case the housing is in the form of a panel and houses planar coils 3, 5.

The man skilled in the art can obviously see the advantages of this invention in comparison with the metal detector disclose in the prior art document WO03/069320. The physical and geometrical coincidences detection of the invention enable a simultaneous spatial and temporal detection of metal and radiation phenomenon. When the coils and the additional types of sensors are separately located, this could lead to an unreliable or false detection.

## Claims

1. A metal detector for control of protected access comprising two oblong shape vertical housings (10,12), emitting and receiving electrical coils (3,5) provided in each of said housings to detect metal pieces, and at least an additional type of sensors (4) provided in at least one of said housings (10,12), **characterised in that** said coils (3,5) are provided symmetrically in regard of said at least one additional type of sensors (4) in at least one of said housings to present a physical and geometrical coincidence detections.

2. Detector according to claim 1, **characterized in that** it comprises at least two metal detector coils (3, 5) in one housing, said additional type of sensors being a central sensor (4), said two metal detector coils (3, 5) being provided respectively on each side of said central sensor (4).

3. Detector according to claim 1, **characterized in that** it comprises said an additional type of sensors (4) inside at least a metal detector coil (3, 5).

4. Detector according to claims 1 to 3, **characterized in that** said additional type of sensors (4) is chosen in the group comprising at least one sensor suitable to detect ionizing radiations, at least one sensor suitable to detect the presence of explosive material or other specific chemical substances and at least one sensor suitable for the badge readings of persons in transit.

5. Detector according to one of claims 1 to 4 **characterized in that** the emitting and receiving electrical coils (3, 5) are of column type.

6. Detector according to claim 5, **characterized in that** the emitting and receiving electrical coils (3, 5) of column type comprise helicoïdal windings round about a cylindrical support core.

7. Detector according to one of claims 1 to 4, **characterized in that** the emitting and receiving electrical coils (3) are of flat panel type.

8. Detector according to claim 7, **characterized in that** the cross section of the housing (10) is of elongate and rectangular form.

9. Detector according to one of claims 1 to 8, **characterized in that** it comprises a badge reader associated to the emitting and receiving electrical coils (3, 5).

10. Detector according to one of claims 1 to 9, **characterized in that** it comprises indicator means (30) on said housings (10, 12) and/or on said structure (14) connecting the upper part of said housings.

11. Detector according to one of claims 1 to 10, **characterized in that** it comprises at least one symmetry plane (A, B).

12. Detector according to one of claims 1 to 11, **characterized in that** it comprises two symmetry planes (A, B).

13. Detector according to one of claims 1 to 12, **characterized in that** at least one of the two housings (10, 12) comprises at least two separate emitting and/or receiving coils (3, 5).

14. Detector according to claim 13, **characterized in that** at least two separate emitting and receiving coils (3, 5) are provided respectively on each side of one said additional detector (4).

15. Detector according to one of claims 1 to 14, **characterized in that** the ratio between the length and the width of the cross-section of the housings (10, 12) is comprised between 2 and 4.

16. Detector according to one of claims 1 to 15, **characterized in that** the length of the cross section of the housings (10, 12) is comprised between 60 and 100cm, while the width of said cross section is comprised between 20 and 35cm.

17. Detector according to one of claims 1 to 16, **characterized in that** the cross section of the housings (10, 12) is of elliptical form.

18. Detector according to one of claims 1 to 17, **characterized in that** the external surface of each housing (10, 12) comprises two plane and parallel panels (20, 22) connected at their ends by two rounded parts (24, 26).

19. Detector according to one of claims 1 to 18, **characterized in that** the external surface of said housings does not comprise any sharp edge.

20. Detector according to one of claims 1 to 19, **characterized in that** the external surface of the housing is smooth or striped with omega shape indentations to reduce optical reflection of light.

21. Detector according to one of claims 1 to 20, **characterized in that** each of the two housings (10, 12) comprises two separate respectively emitting and/or receiving coils (3, 5).

22. Detector according to claim 21, **characterized in that** it comprises means controlling operation of said emitting and receiving coils (3, 5) so that when an emitting coil (3, TX1, TX2) provided in a housing (10, 12) is active, two other and spatially separate receiving coils (5, RX1, RX2) are also simultaneously or subsequently active.

23. Detector according to claim 22, **characterized in that** it comprises means controlling operation of said emitting and receiving coils (3, 5) so that two emitting coils (3, TX1, TX2) are subsequently or simultaneously active, and when an emitting coil (3, TX1, TX2) is active, two receiving coils (5, RX1, RX2) are also simultaneously or subsequently active.

24. Detector according to one of claims 1 to 23, **characterized in that** each of the two housings (10, 12) comprises one emitting coil (TX) and one receiving coil (RX) and the detector comprises means controlling operation of said emitting and receiving coils so that when an emitting coil (TX1, TX2) provided in a housing (10, 12) is active, the two receiving coils (RX1, RX2) provided respectively in both the two housings are also simultaneously or subsequently active.

25. Detector according to one of claims 1 to 23, **characterized in that** each of the two housings (10, 12) comprises two emitting coils (TX1, TX2) or two receiving coils (RX1, RX2) and the detector comprises means controlling operation of said emitting and receiving coils so that when an emitting coil (TX1, TX2) provided in a housing is active, the two receiving coils (RX1, RX2) provided in the other housing are also simultaneously or subsequently active.

26. Detector according to one of claims 1 to 25, **characterized in that** all the information issued by the plurality of sensors (3, 4, 5), such as metal, radioactive, chemical or badge sensors, are displayed on a common signalling display (2).

27. Detector according to one of claims 1 to 26, **characterized in that** all the active detectors (3, 4, 5), which are located in the same portal detector operate on a single and the same individual.

28. Detector according to one of claims 1 to 27, **characterized in that** it comprises a photoelectric barrier, suitable to detect when an individual penetrates into the portal, so as to assure that the detection is operated when such an individual is inside the portal, between the two housings (10, 12).

29. Detector according to one of claims 1 to 28, **characterized in that** it comprises at least one said additional type of sensor which is divided into a plurality of individual sensors which are staggered on the height of a housing (10, 12) so as to cover all the height of said housing.

30. Detector according to one of claims 1 to 29, **characterized in that** it comprises a plurality of X/Gamma sensors (40) staggered on the height of a housing (10, 12) so as to cover all the height of said housing (10,12).

31. Detector according to one of claims 1 to 29, **characterized in that** it comprises a X/Gamma sensors composed of a scintillator (41) and two photo-detectors (43) on each extremity.

32. Detector according to claim 31, **characterized in that** it comprises means suitable to operate the sum of the outputs of said two photo-detectors (43) so as to provide an amplitude signal and to operate the ratio of the outputs of said two photo-detectors (43) so as to provide a location signal.

33. Detector according to one of claims 1 to 32, **characterized in that** it comprises at least two kind of sensors as well as a control unit suitable to control and to change when necessary the sensitivity of one type of sensor in view of the output of another type of sensor.

34. Detector according to one of claims 1 to 33, **characterized in that** said emitting and receiving coils (3, 5 ; TX, RX) are associated with control means adapted to detect lead component, said detector comprising furthermore X/Gamma sensors (40) as well as a control unit suitable to increase the sensitivity of the X/Gamma sensors (40) when said control means detect the presence of lead component.

## Patentansprüche

1. Metalldetektor zur Kontrolle eines geschützten Zugangs, umfassend zwei vertikale Gehäuse (10, 12) länglicher Form, sendende und empfangende elektrische Spulen (3, 5), die in jedem der genannten Gehäuse bereitgestellt sind, um Metallstücke zu detektieren, und wenigstens einen zusätzlichen Sensorentyp (4), die in wenigstens einem der genannten Gehäuse (10, 12) bereitgestellt sind, **dadurch gekennzeichnet, dass** die genannten Spulen (3, 5) symmetrisch gegenüber dem genannten wenigstens einen zusätzlichen Typ von Sensoren (4) in wenigstens einem der genannten Gehäuse bereitgestellt sind, um eine physische und geometrische Koinzidenzdetektion darzustellen.

2. Detektor gemäß Anspruch 1, **dadurch gekennzeichnet, dass** er wenigstens zwei Metalldetektorspulen (3, 5) in einem Gehäuse umfasst, wobei der genannte zusätzliche Sensortyp ein zentraler Sensor (4) ist, wobei die genannten zwei Metalldetektorspulen (3, 5) jeweils auf jeder Seite des genannten zentralen Sensors (4) bereitgestellt sind.

3. Detektor gemäß Anspruch 1, **dadurch gekennzeichnet, dass** er den genannten einen zusätzlichen Sensortyp (4) in wenigstens einer Metalldetektorspule (3, 5) umfasst.

4. Detektor gemäß Anspruch 1 bis 3, **dadurch gekennzeichnet, dass** der genannte zusätzliche Sensortyp (4) ausgewählt ist aus der Gruppe, umfassend wenigstens einen Sensor, der geeignet ist, um ionisierende Strahlungen zu detektieren, wenigstens einen Sensor, der geeignet ist, um das Vorhandensein von explosivem Material oder sonstige spezifische Substanzen zu detektieren, und wenigstens einen Sensor, der zum Ausweis-Auslesen von Personen in Transit geeignet ist.

5. Detektor gemäß einem der Ansprüche 1 bis 4, **dadurch gekennzeichnet, dass** die sendenden und empfangenden elektrischen Spulen (3, 5) vom Säulentyp sind.

6. Detektor gemäß Anspruch 5, **dadurch gekennzeichnet, dass** die sendenden und empfangenden elektrischen Spulen (3, 5) vom Säulentyp spiralförmige Windungen rund um einen zylindrischen Trägerkern umfassen.

7. Detektor gemäß einem der Ansprüche 1 bis 4, **dadurch gekennzeichnet, dass** die sendenden und empfangenden Spulen (3) vom flachen Paneeltyp sind.

8. Detektor gemäß Anspruch 7, **dadurch gekennzeichnet, dass** der Querschnitt des Gehäuses (10) eine langgestreckte und rechteckige Form hat.

9. Detektor gemäß einem der Ansprüche 1 bis 8, **dadurch gekennzeichnet, dass** er einen Ausweis-Leser umfasst, der den sendenden und empfangenden Spulen (3, 5) zugeordnet ist.

10. Detektor gemäß einem der Anspruch 1 bis 9, **dadurch gekennzeichnet, dass** er Indikatormittel (30) auf den genannten Gehäusen (10, 12) und / oder auf der genannten Struktur (14) umfasst, die den oberen Teil der genannten Gehäuse anschließen.

11. Detektor gemäß einem der Ansprüche 1 bis 10, **dadurch gekennzeichnet, dass** er wenigstens eine Symmetrieebene (A, B) umfasst.

12. Detektor gemäß einem der Ansprüche 1 bis 11, **dadurch gekennzeichnet, dass** er zwei Symmetrieebenen (A, B) umfasst.

13. Detektor gemäß einem der Ansprüche 1 bis 12, **dadurch gekennzeichnet, dass** wenigstens eines der zwei Gehäuse (10, 12) wenigstens zwei sendende und / oder empfangende Spulen (3, 5) umfasst.

14. Detektor gemäß Anspruch 13, **dadurch gekennzeichnet, dass** wenigsten zwei separate sendende und empfangende Spulen (3, 5) jeweils an jeder Seite eines der genannten zusätzlichen Detektoren (4) bereitgestellt sind.

15. Detektor gemäß einem der Ansprüche 1 bis 14, **dadurch gekennzeichnet, dass** das Verhältnis zwischen der Länge und der Breite des Querschnitts der Gehäuse (10, 12) zwischen 2 und 4 inbegriffen ist.

16. Detektor gemäß einem der Ansprüche 1 bis 15, **dadurch gekennzeichnet, dass** die Länge des Querschnitts der Gehäuse (10, 12) zwischen 60 und 100 cm inbegriffen ist, während die Breite des genannten Querschnitts zwischen 20 und 35 cm inbegriffen ist.

17. Detektor gemäß einem der Ansprüche 1 bis 16, **dadurch gekennzeichnet, dass** der Querschnitt der Gehäuse (10,1 2) von elliptischer Form ist.

18. Detektor gemäß einem der Ansprüche 1 bis 17, **dadurch gekennzeichnet, dass** die externe Fläche jedes Gehäuses (10, 12) zwei ebene und parallele Paneele (20, 22) umfasst, die an ihren Enden durch zwei abgerundete Teile (24, 26) angeschlossen sind.

19. Detektor gemäß einem der Ansprüche 1 bis 18, **dadurch gekennzeichnet, dass** die externe Fläche der genannten Gehäuse keine scharfe Kante umfasst.

20. Detektor gemäß einem der Ansprüche 1 bis 19, **dadurch gekennzeichnet, dass** die externe Fläche des Gehäuses glatt oder gestreift mit omegaförmigen Einkerbungen ist, um die optische Reflektion des Lichts zu reduzieren.

21. Detektor gemäß einem der Ansprüche 1 bis 20, **dadurch gekennzeichnet, dass** jedes der zwei Gehäuse (10, 12) zwei separate, jeweils sendende und / oder empfangende Spulen (3, 5) umfasst.

22. Detektor gemäß Anspruch 21, **dadurch gekennzeichnet, dass** er Mittel umfasst, die den Betrieb der genannten sendenden und empfangenden Spulen (3, 5) derart kontrollieren, dass, wenn eine sendende Spule (3, TX1, TX2), die in einem Gehäuse (10, 12) bereitgestellt ist, aktiv ist, zwei andere und räumlich separate empfangende Spulen (5, RX1, RX2) ebenfalls gleichzeitig oder anschließend aktiv sind.

23. Detektor gemäß Anspruch 22, **dadurch gekennzeichnet, dass** er Mittel umfasst, die den Betrieb der genannten sendenden und empfangenden Spulen (3, 5) derart kontrollieren, dass zwei sendende Spulen (3, TX1, TX2) anschließend oder gleichzeitig aktiv sind und wenn eine sendende Spule (3, TX1, TX2) aktiv ist, zwei empfangende Spulen (5, RX1, RX2) ebenfalls gleichzeitig oder nacheinander aktiv sind.

24. Detektor gemäß einem der Ansprüche 1 bis 23, **dadurch gekennzeichnet, dass** jedes der zwei Gehäuse (10, 12) eine sendende Spule (TX) und eine empfangende Spule (RX) umfasst und der Detektor Mittel umfasst, die den Betrieb der genannten sendenden und empfangenden Spulen derart kontrollieren, dass, wenn eine sendende Spule (TX1, TX2), die in einem Gehäuse (10, 12) bereitgestellt ist, aktiv ist, die zwei empfangenden Spulen (RX1, RX2) jeweils sowohl in den zwei Gehäusen als auch gleichzeitig oder nacheinander aktiv sind.

25. Detektor gemäß einem der Ansprüche 1 bis 23, **dadurch gekennzeichnet, dass** jedes der zwei Gehäuse (10, 12) zwei sendende Spulen (TX1, TX2) oder zwei empfangende Spulen (RX1, RX2) umfasst und der Detektor Mittel umfasst, die den Betrieb der genannten sendenden und empfangenden Spulen derart kontrolliert, dass, wenn eine sendende Spule (TX1, TX2), die in einem Gehäuse bereitgestellt ist, aktiv ist, die zwei empfangenden Spulen (RX1, RX2), die in dem anderen Gehäuse bereitgestellt sind, ebenfalls gleichzeitig oder nacheinander aktiv sind.

26. Detektor gemäß einem der Ansprüche 1 bis 25, **dadurch gekennzeichnet, dass** alle aus der Vielzahl von Sensoren (3, 4, 5) stammenden Informationen, wie z. B. Metall-, radioaktive, chemische oder Ausweis-Sensoren, auf einem gemeinsamen Signalgebungs-Display angezeigt werden.

27. Detektor gemäß einem der Ansprüche 1 bis 26, **dadurch gekennzeichnet, dass** alle aktiven Detektoren (3, 4, 5), die in demselben Portaldetektor angeordnet sind, an einer und derselben Person arbeiten.

28. Detektor gemäß einem der Ansprüche 1 bis 27, **dadurch gekennzeichnet, dass** er eine fotoelektrische Schranke umfasst, die geeignet ist, um derart zu detektieren, wenn eine Person in das Portal eintritt, dass gewährleistet wird, dass die Detektion betrieben wird, wenn eine solche Person sich innerhalb des Portals zwischen den zwei Gehäusen (10, 12) befindet.

29. Detektor gemäß einem der Ansprüche 1 bis 28, **dadurch gekennzeichnet, dass** er wenigstens einen der genannten Sensortypen umfasst, der in eine Vielzahl von einzelnen Sensoren unterteilt ist, die auf der Höhe eines Gehäuses (10, 12) derart versetzt sind, dass die gesamte Höhe des genannten Gehäuses abgedeckt ist.

30. Detektor gemäß einem der Ansprüche 1 bis 29, **dadurch gekennzeichnet, dass** er eine Vielzahl von X- / Gamma-Sensoren (40) umfasst, die auf der Höhe eines Gehäuses (10, 12) derart verteilt sind, dass die gesamte Höhe des genannten Gehäuses (10, 12) abgedeckt ist.

31. Detektor gemäß einem der Ansprüche 1 bis 29 **dadurch gekennzeichnet, dass** er X- / Gamma-Sensoren umfasst, die aus einem Szintillator (41) und zwei Fotodetektoren (43) auf jedem Ende zusammengesetzt sind.

32. Detektor gemäß Anspruch 31, **dadurch gekennzeichnet, dass** er Mittel umfasst, die geeignet sind, die Summe der Ausgaben der genannten zwei FotoDetektoren (43) derart zu verarbeiten, dass ein Amplitudensignal bereitgestellt wird und das Verhältnis der Ausgaben der genannten zwei Fotosensoren (43) derart zu verarbeiten, dass ein Standortsignal bereitgestellt wird.

33. Detektor gemäß irgendeinem der Ansprüche 1 bis 32, **dadurch gekennzeichnet, dass** er wenigstens zwei Arten von Sensoren sowie eine Kontrolleinheit umfasst, die geeignet ist, um die Sensibilität eines Sensortyps in Anbetracht der Ausgabe eines anderen Sensortyps zu kontrollieren und, wenn notwendig, zu ändern.

34. Detektor gemäß einem der Ansprüche 1 bis 33, **dadurch gekennzeichnet, dass** die genannten sendenden und empfangenden Spulen (3, 5, TX, RX) Kontrollmitteln zugeordnet sind, die angepasst sind, um Bleikomponenten zu detektieren, wobei der genannte Detektor weiterhin X- / Gamma-Sensoren (40) sowie eine Kontrolleinheit umfasst, die geeignet ist, um die Sensibilität der X- / Gamma-Sensoren (40) zu erhöhen, wenn die genannten Kontrollmittel das Vorhandensein von Bleikomponenten detektieren.

## Revendications

1. Détecteur de métal pour contrôle d'accès protégé comprenant deux boîtiers verticaux de forme oblongue (10, 12), des bobines électriques d'émission et de réception (3, 5) disposées dans chacun desdits boîtiers pour détecter des pièces de métal, et au moins un type supplémentaire de capteurs (4) disposés dans au moins un desdits boîtiers (10, 12), **caractérisé en ce que** lesdites bobines (3, 5) sont disposées de manière symétrique par rapport audit au moins un type supplémentaire de capteurs (4) dans au moins un desdits boîtiers pour présenter des détections de coïncidence géométrique et physique.

2. Détecteur selon la revendication 1, **caractérisé en ce qu'**il comprend au moins deux bobines de détection de métal (3, 5) dans un boîtier, ledit type supplémentaire de capteurs étant un capteur central (4), lesdites deux bobines de détection de métal (3, 5) se trouvant respectivement de chaque côté dudit capteur central (4).

3. Détecteur selon la revendication 1, **caractérisé en ce qu'**il comprend ledit un type supplémentaire de capteurs (4) à l'intérieur d'au moins une bobine de détection de métal (3, 5).

4. Détecteur selon les revendications 1 à 3, **caractérisé en ce que** ledit type supplémentaire de capteurs (4) est choisi dans le groupe comprenant au moins un capteur approprié pour détecter des rayonnements ionisants, au moins un capteur approprié pour détecter la présence de matériau explosif ou d'autres substances chimiques spécifiques et au moins un capteur approprié pour les lectures de badge de personnes en transit.

5. Détecteur selon l'une des revendications 1 à 4, **caractérisé en ce que** les bobines électriques d'émission et de réception (3, 5) sont de type colonne.

6. Détecteur selon la revendication 5, **caractérisé en ce que** les bobines électriques d'émission et de réception (3, 5) de type colonne comprennent des enroulements hélicoïdaux tournant autour d'un noyau de support cylindrique.

7. Détecteur selon l'une des revendications 1 à 4, **caractérisé en ce que** les bobines électriques d'émission et de réception (3) sont de type panneau plat.

8. Détecteur selon la revendication 7, **caractérisé en ce que** la section transversale du boîtier (10) est de forme allongée et rectangulaire.

9. Détecteur selon l'une des revendications 1 à 8, **caractérisé en ce qu'**il comprend un lecteur de badge associé aux bobines électriques d'émission et de réception (3, 5).

10. Détecteur selon l'une des revendications 1 à 9, **caractérisé en ce qu'**il comprend un moyen d'indication (30) sur lesdits boîtiers (10, 12) et/ou sur ladite structure (14) reliant la partie supérieure desdits logements.

11. Détecteur selon l'une des revendications 1 à 10, **caractérisé en ce qu'**il comprend au moins un plan de symétrie (A, B).

12. Détecteur selon l'une des revendications 1 à 11, **caractérisé en ce qu'**il comprend deux plans de symétrie (A, B).

13. Détecteur selon l'une des revendications 1 à 12, **caractérisé en ce qu'**au moins un des deux boîtiers (10, 12) comprend au moins deux bobines d'émission et/ou de réception séparées (3, 5).

14. Détecteur selon la revendication 13, **caractérisé en ce qu'**au moins deux bobines d'émission et de réception séparées (3, 5) sont disposées respectivement de chaque côté d'un dit détecteur supplémentaire (4).

15. Détecteur selon l'une des revendications 1 à 14, **caractérisé en ce que** le rapport entre la longueur et la largeur de la section transversale des boîtiers (10, 12) est compris entre 2 et 4.

16. Détecteur selon l'une des revendications 1 à 15, **caractérisé en ce que** la longueur de la section transversale des boîtiers (10, 12) est comprise entre 60 et 100 cm, alors que la largeur de ladite section transversale est comprise entre 20 et 35 cm.

17. Détecteur selon l'une des revendications 1 à 16, **caractérisé en ce que** la section transversale des boîtiers (10, 12) est de forme elliptique.

18. Détecteur selon l'une des revendications 1 à 17, **caractérisé en ce que** la surface externe de chaque boîtier (10, 12) comprend deux panneaux plans et parallèles (20, 22) reliés au niveau de leurs extrémités par deux parties arrondies (24, 26).

19. Détecteur selon l'une des revendications 1 à 18, **caractérisé en ce que** la surface externe desdits boîtiers ne comprend pas de bord tranchant.

20. Détecteur selon l'une des revendications 1 à 19, **caractérisé en ce que** la surface externe dudit boîtier est lisse ou striée avec des encoches de forme oméga afin de réduire la réflexion optique de la lumière.

21. Détecteur selon l'une des revendications 1 à 20, **caractérisé en ce que** chacun des deux boîtiers (10, 12) comprend deux bobines d'émission et/ou de réception respectivement séparées (3, 5).

22. Détecteur selon la revendication 21, **caractérisé en ce qu'**il comprend un moyen commandant le fonctionnement desdites bobines d'émission et de réception (3, 5) de telle sorte que, quand une bobine d'émission (3, TX1, TX2) disposée dans un boîtier (10, 12) est active, deux autres bobines de réception spatialement séparées (5, RX1, RX2) sont également actives simultanément ou consécutivement.

23. Détecteur selon la revendication 22, **caractérisé en ce qu'**il comprend un moyen commandant le fonctionnement desdites bobines d'émission et de réception (3, 5) de telle sorte que deux bobines d'émission (3, TX1, TX2) sont actives simultanément ou consécutivement, et quand une bobine d'émission (3, TX1, TX2) est active, deux bobines de réception (5, RX1, RX2) sont également actives simultanément ou consécutivement.

24. Détecteur selon l'une des revendications 1 à 23, **caractérisé en ce que** chacun des deux boîtiers (10, 12) comprend une bobine d'émission (TX) et une bobine de réception (RX) et le détecteur comprend un moyen commandant le fonctionnement desdites bobines d'émission et de réception de telle sorte que, quand une bobine d'émission (TX1, TX2) disposée dans un logement (10, 12) est active, les deux bobines de réception (RX1, RX2) disposées respectivement dans les deux boîtiers sont également actives simultanément ou consécutivement.

25. Détecteur selon l'une des revendications 1 à 23, **caractérisé en ce que** chacun des deux boîtiers (10, 12) comprend deux bobines d'émission (TX1, TX2) ou deux bobines de réception (RX1, RX2) et le détecteur comprend un moyen commandant le fonctionnement desdites bobines d'émission et de réception de telle sorte que, quand une bobine d'émission (TX1, TX2) disposée dans un boîtier est active, les deux bobines de réception (RX1, RX2) disposées dans l'autre boîtier sont également actives simultanément ou consécutivement.

26. Détecteur selon l'une des revendications 1 à 25, **caractérisé en ce que** toutes les informations émises par la pluralité de capteurs (3, 4, 5), tels que des capteurs de métal, de produit radioactif, de produit chimique ou de badge, s'affichent sur un dispositif d'affichage de signalisation commun (2).

27. Détecteur selon l'une des revendications 1 à 26, **caractérisé en ce que** tous les détecteurs actifs (3, 4, 5) qui se situent dans le même détecteur de portique fonctionnent sur un seul et même individu.

28. Détecteur selon l'une des revendications 1 à 27, **caractérisé en ce qu'**il comprend une barrière photoélectrique, appropriée pour détecter le moment où un individu pénètre dans le portique, de manière à s'assurer que la détection fonctionne quand un tel individu se trouve à l'intérieur du portique, entre les deux logements (10, 12).

29. Détecteur selon l'une des revendications 1 à 28, **caractérisé en ce qu'**il comprend au moins un dit type supplémentaire de capteur qui est divisé en une pluralité de capteurs individuels qui sont étagés sur la hauteur d'un boîtier (10, 12) de manière à couvrir toute la hauteur dudit boîtier.

30. Détecteur selon l'une des revendications 1 à 29, **caractérisé en ce qu'**il comprend une pluralité de capteurs X/Gamma (40) étagés sur la hauteur d'un boîtier (10, 12) de manière à couvrir toute la hauteur dudit boîtier (10, 12).

31. Détecteur selon l'une des revendications 1 à 29, **caractérisé en ce qu'**il comprend des capteurs X/Gamma composés d'un scintillateur (41) et de deux photo-détecteurs (43) sur chaque extrémité.

32. Détecteur selon la revendication 31, **caractérisé en ce qu'**il comprend un moyen approprié pour mettre en oeuvre la somme des sorties des deux photo-détecteurs (43) de manière à fournir un signal d'amplitude et pour mettre en oeuvre le rapport des sorties desdits deux photo-détecteurs (43) de manière à fournir un signal de positionnement.

33. Détecteur selon l'une des revendications 1 à 32, **caractérisé en ce qu'**il comprend au moins deux sortes de capteurs ainsi qu'une unité de commande appropriée pour commander et pour changer si nécessaire la sensibilité d'un type de capteur compte tenu de la sortie d'un autre type de capteur.

34. Détecteur selon l'une des revendications 1 à 33, **caractérisé en ce que** lesdits bobines d'émission et de réception (3, 5 ; TX, RX) sont associées à un moyen de commande adapté pour détecter un composant de plomb, ledit détecteur comprenant en outre des capteurs X/Gamma (40) ainsi qu'une unité de commande appropriée pour augmenter la sensibilité des capteurs X/Gamma (40) quand ledit moyen de commande détecte la présence de composant de plomb.
